# EUROPÄISCHE PATENTSCHRIFT

(11) **EP 1 979 109 B1**
(45) Veröffentlichungstag und Bekanntmachung des Hinweises auf die Patenterteilung: **10.06.2009**
(21) Anmeldenummer: 06829640.9
(22) Anmeldetag: 15.12.2006
(51) Int. Cl.: B21D 37/20, B24B 19/26, B23P 15/24

(54) **VORRICHTUNG UND VERFAHREN ZUR ENDBEARBEITUNG EINES UMFORMWERKZEUGS FÜR EIN KAROSSERIEBLECHTEIL**
APPARATUS AND METHOD FOR THE FINAL PROCESSING OF A FORMING TOOL FOR A SHEET-METAL BODY PART
DISPOSITIF ET PROCEDE D'USINAGE FINAL D'UN OUTIL DE FORMAGE DE PIECE EN TOLE POUR CARROSSERIE

(30) Priorität: 13.01.2006 DE 102006001712
(43) Veröffentlichungstag der Anmeldung: 15.10.2008
(73) Patentinhaber: AUDI AG, 85045 Ingolstadt (DE)
(72) Erfinder: KERSCHNER, Matthias, 85296 Rohrbach (DE); WALTL, Hubert, 85107 Baar-Ebenhausen (DE); MARTIN, Hörnig, 01896 Ohorm (DE); MAHLER, Nadine, 81369 München (DE)
(74) Vertreter: Geissler, Manfred
(86) Internationale Anmeldenummer: PCT/EP2006/012090
(87) Internationale Veröffentlichungsnummer: WO 2007/087867

(56) Entgegenhaltungen:
- EP-A1- 0 893 171
- DE-A1- 19 915 758
- DE-C2- 4 311 154

## Beschreibung

Die Erfindung betrifft eine Vorrichtung sowie ein Verfahren zur Endbearbeitung eines Umformwerkzeugs für ein Karosserieblechteil gemäß dem Oberbegriff der Patentansprüche 1 und 15.

Bei der Herstellung von Tiefziehwerkzeugen für Karosserieblechteile erfolgt im allgemeinen eine abschließende Endbearbeitung oder Nachbearbeitung der Werkzeugflächen, um während eines Tiefziehvorgangs eine zu hohe lokale Flächenpressung der Karosserieblechteile zu vermeiden. Eine solche zu hohe Flächenpressung kann Risse in dem Karosserieblechteil erzeugen.

Daher können z. B. für die abschließende Endbearbeitung der Werkzeugflächen in einem sogenannten Tuschiervorgang die nachzubearbeitenden Flächenbereiche der Werkzeugfläche identifiziert und nachfolgend beispielsweise durch ein Schaben oder Schleifen abgetragen werden.

So ist etwa aus der DE 43 11 154 C2 eine gattungsgemäße Vorrichtung sowie ein Verfahren bekannt, bei dem in einem ersten Arbeitsschritt zum Identifizieren eines nachzubearbeitenden Flächenbereichs einer Werkzeugfläche zunächst ein Blechteil mit Tuschierfarbe bestrichen wird. Das Blechteil wird in eine Tuschierpresse eingelegt und zwischen zwei Werkzeughälften des Werkzeugs gepresst bzw. tiefgezogen. Anhand eines Farbabdruckes des tuschierten Blechteils auf der jeweiligen Werkzeugfläche können die Flächenbereiche mit zu hoher Flächenpressung identifiziert werden. D. h. Flächenbereiche mit einem Farbabdruck hoher Farbintensität üben eine zu hohe Flächenpressung aus und müssen daher in einem zweiten Arbeitsschritt durch eine entsprechende Oberflächenbearbeitung nachbearbeitet werden.

Für eine effiziente Nutzung der Tuschierpresse erfolgt die Endbearbeitung der identifizierten Flächenbereiche der Werkzeugflächen außerhalb der Tuschierpresse. Dadurch ist die Tuschierpressenbelegung zeitsparend auf den eigentlichen Tuschiervorgang begrenzt. Die Werkzeugfläche wird nach dem Tuschiervorgang jedoch in manueller Endbearbeitung durch Schaben oder Schleifen weiterbearbeitet. Diese Oberflächenbehandlung ist einerseits zeitaufwendig. Andererseits liegt die Bearbeitung der identifizierten Flächenbereiche, insbesondere ein Höhenabtrag, im subjektiven Ermessen des jeweiligen Bearbeiters.

Aus der DE 199 15 758 A1 ist demgegenüber ein Verfahren zur Herstellung eines Werkzeugs bekannt, bei dem computerunterstützt ausgehend von der gewünschten Geometrie des fertigen Werkstückes - ohne einen Tuschiervorgang - mit Hilfe geometrischer Berechnungen die Struktur des Werkzeugs ermittelt und das Werkzeug hergestellt werden kann. Ein so hergestelltes Werkzeug wird mit dem vorstehenden Tuschierverfahren überprüft und ggf. nachbearbeitet.

Die Aufgabe der Erfindung besteht darin, eine Vorrichtung bzw. ein Verfahren bereitzustellen, bei dem eine Endbearbeitung des Umformwerkzeugs für ein Karosserieblechteil effizient durchgeführt werden kann.

Erfindungsgemäß weist die gattungsgemäße Vorrichtung eine Bearbeitungseinrichtung auf, die die Werkzeugfläche mit dem Farbabdruck elektronisch erfasst und in Abhängigkeit von der Farbintensität des Farbabdruckes die Lage und/oder Dimension des nachzubearbeitenden Flächenbereichs ermittelt und diesen entsprechend nachbearbeitet. Dadurch erfolgt die bislang zeit- und kostenintensiv in manueller Tätigkeit durchgeführte Endbearbeitung erfindungsgemäß in einem automatisierten Arbeitsprozess.

Gemäß dem Patentanspruch 2 weist die Bearbeitungseinrichtung eine Analyseeinheit auf, die die Werkzeugfläche mitsamt des Farbabdruckes vorzugsweise optisch erfasst und daraus entsprechende Bilddaten der Werkzeugfläche erzeugt.

Eine Nachbearbeitung der identifizierten nachzubearbeitenden Flächenbereiche kann z. B. durch einen Abtrag mittels Laser, durch Erodieren, Bandschleifen oder durch ein Schleifen mit flexiblem Schleifteller durchgeführt werden.

Gemäß dem Patentanspruch 2 kann die Bearbeitungseinrichtung eine Analyseeinheit aufweisen, die die Werkzeugfläche mit dem Farbabdruck vorzugsweise optisch erfasst und daraus entsprechende Bilddaten der Werkzeugfläche erzeugt. Mittels der von der Analyseeinheit erzeugten Bilddaten der Werkzeugfläche kann diese auf elektronischem Wege bewertet und/oder weiterbearbeitet werden.

Dabei ist es gemäß dem Patentanspruch 3 von Vorteil, wenn für eine Eingrenzung des identifizierten nachzubearbeitenden Flächenbereich die Analyseeinheit einen Umfangsrand des nachzubearbeitenden Flächenbereichs ermittelt. Die Ermittlung des Umfangsrands kann dabei vorzugsweise mittels einer Farbkennung durchgeführt werden, bei der auf der Grundlage unterschiedlicher Farbintensitäten der Umfangsrand der nachzubearbeitenden Fläche bestimmt wird.

Gemäß dem Patentanspruch 4 weist die Bearbeitungseinrichtung oder die Analyseeinheit zur Bilderfassung eine entsprechende Einrichtung, z. B. eine Digitalkamera auf, die die Werkzeugfläche zumindest in einer Ansicht fotografiert und mittels der daraus erzeugten Bilddaten ein dreidimensionales Modell der Werkzeugfläche erstellt. Vorzugsweise kann die Digitalkamera die Werkzeugfläche in einer Mehrzahl von Ansichten aus unterschiedlichen Perspektiven fotografieren, so dass das dreidimensionale Modell der Werkzeugfläche entsprechend genauer erstellt werden kann.

Gemäß dem Patentanspruch 5 kann die Bearbeitungseinrichtung in Abhängigkeit von der Intensität des Farbabdruckes auf dem nachzubearbeitenden Flächenbereich eine erforderliche Materialabtragung ermitteln. Auf der Grundlage dieser ermittelten erforderlichen Materialabtragung kann im folgenden Nachbearbeitungsprozess in zeitsparender Weise die Werkzeugfläche formgenau nachbearbeitet werden.

Wenn gemäß dem Patentanspruch 6 das Werkzeug aus einem Werkzeugoberteil und einem Werkzeugunterteil besteht, die in einer entsprechenden Tiefziehpresse montiert sind, kann die Bearbeitungseinrichtung vorteilig die beiden gegenüberliegenden Werkzeugflächen mit dem jeweiligen Farbabdruck erfassen. Auf diese Weise werden in einem Pressvorgang die Flächenbereiche mit zu hoher Flächenpressung gleichzeitig an den gegenüberliegenden Werkzeugflächen identifiziert. Gemäß dem Patentanspruch 7 kann dabei die Analyseeinheit die Bilddaten des Farbabdruckes der ersten Werkzeugfläche und des Farbabdruckes der zweiten Werkzeugfläche einander überlagern. Anhand einer daraus gebildeten Schnittmenge kann die Analyseeinheit den nachzubearbeitenden Flächenbereich bestimmen. D. h. Flächenbereiche der jeweiligen Werkzeugflächen, die eine hohe Farbintensität aufweisen und sich überschneiden, bilden einen Überschneidungsbereich, den die Analyseeinheit als einen nachzubearbeitenden Bereich festlegt. Ein solcher Überschneidungsbereich ist für eine folgende Nachbearbeitung besonders relevant, da hier das Blechteil beidseitig mit einer zu hohen Flächenpressung belastet und somit mit besonders geringer Blechstärke ausgebildet ist.

Gemäß dem Patentanspruch 8 kann die Bearbeitungseinrichtung eine Steuereinheit aufweisen, die anhand der etwa von der Analyseeinheit erfassten Lage und Dimension des nachzubearbeitenden Flächenbereichs ein Bewegungsprogramm für eine Handhabungseinheit erzeugt. Auf der Grundlage dieses Bewegungsprogramms kann die Handhabungseinheit die jeweilige Werkzeugfläche nachbearbeiten. Somit ist mittels der Analyseeinheit, der Steuereinheit und der Handhabungseinheit eine Steuerstrecke bereitgestellt, bei der das Erfassen, Auswerten und Nachbearbeiten automatisiert erfolgt.

Dabei kann gemäß dem Patentanspruch 9 bei einem Auswerteschritt die Steuereinheit den als Ist-Zustand von der Analyseeinheit erfassten Farbabdruck der Werkzeugfläche mit einem gespeicherten Soll-Zustand vergleichen und auf der Grundlage dieses Vergleichs den Flächenbereich identifizieren und entsprechende Steuersignale zu der Handhabungseinheit leiten.

Gemäß dem Patentanspruch 10 kann die Bearbeitungseinrichtung bzw. ihre Steuereinheit bei einer im wesentlichen gleichmäßigen Farbverteilung des von der Analyseeinheit erfassten Farbabdruckes - d. h. die Flächenpressung ist über die Werkzeugfläche im wesentlichen konstant verteilt - die Steuereinheit bestimmen, dass eine folgende Nachbearbeitung nicht erforderlich ist und somit den Endbearbeitungsvorgang beenden. Alternativ kann der Endbearbeitungsvorgang beendet werden, wenn die Steuereinheit eine im wesentliche Übereinstimmung des als Ist-Zustand erfassten Farbabdruckes der Werkzeugfläche mit und des gespeicherten Soll-Zustand feststellt.

Gemäß dem Patentanspruch 11 kann die Bearbeitungseinrichtung nach erfolgter Nachbearbeitung der Werkzeugfläche einen weiteren Farbabdruck eines tuschierten Blechteiles auf der Werkzeugfläche erneut erfassen und ggf. eine entsprechende Oberflächenbearbeitung durchführen. Auf diese Weise kann der Nachbearbeitungsprozess so lange iterativ durchgeführt werden, bis das Ergebnis, d. h. z. B. ein Farbabdruck mit gleichmäßiger Farbintensität, erreicht ist.

Gemäß dem Patentanspruch 12 kann die Handhabungseinrichtung als ein Industrieroboter ausgebildet sein, der vorzugsweise unmittelbar an einer dem Werkzeug zugeordneten Tiefziehpresse angeordnet ist. Dadurch kann das Tiefziehwerkzeug unmittelbar in der Presse endbearbeitet werden, ohne dass eine Demontage des Werkzeugs von der Presse notwendig wird.

Gemäß dem Patentanspruch 13 ist es aus Platzgründen sowie für eine exakte Erfassung der Bilddaten von Vorteil, wenn eine Bilderfassungseinrichtung, z. B. die Digitalkamera, und/oder eine Beleuchtungseinrichtung, die die Werkzeugfläche während der Bilderfassung beleuchtet, von dem Industrieroboter mitgeführt ist.

Die aus der Analyseeinheit, der Steuereinheit sowie der Handhabungseinheit bestehende Steuerstrecke kann gemäß dem Patentanspruch 14 durch eine zusätzliche Auftragseinheit erweitert werden, die automatisiert Tuschierfarbe auf das Blechteil aufträgt. Auf diese Weise ist zusätzlich auch das Auftragen von Tuschierfarbe auf das Blechteil automatisiert.

Ein Verfahren gemäß der Erfindung ist in Anspruch 15 definiert. Gemäß dem Patentanspruch 15 kann die Endbearbeitungsvorrichtung ein entsprechendes Verfahren zur Endbearbeitung des Umformwerkzeugs ausführen, wonach zunächst der Farbabdruck auf der Werkzeugfläche elektronisch erfasst und anschließend in Abhängigkeit von der Intensität des Farbabdruckes die Lage und/oder Dimension des nachzubearbeitenden Flächenbereichs ermittelt und entsprechend nachbearbeitet wird.

Nachfolgend ist ein Ausführungsbeispiel der Erfindung anhand der beigefügten Figuren beschrieben.

Es zeigen:
- Fig. 1: In einer schematischen Darstellung eine Vorrichtung zur Endbearbeitung eines Umformwerkzeugs für ein Karosserieblechteil;
- Fig. 2: in einem Flussdiagramm das Verfahren zur Endbearbeitung des Umformwerkzeugs; und
- Fig. 3: einander überlagerte korrespondierende Werkzeugflächen eines Werkzeugoberteils und eines Werkzeugunterteils.

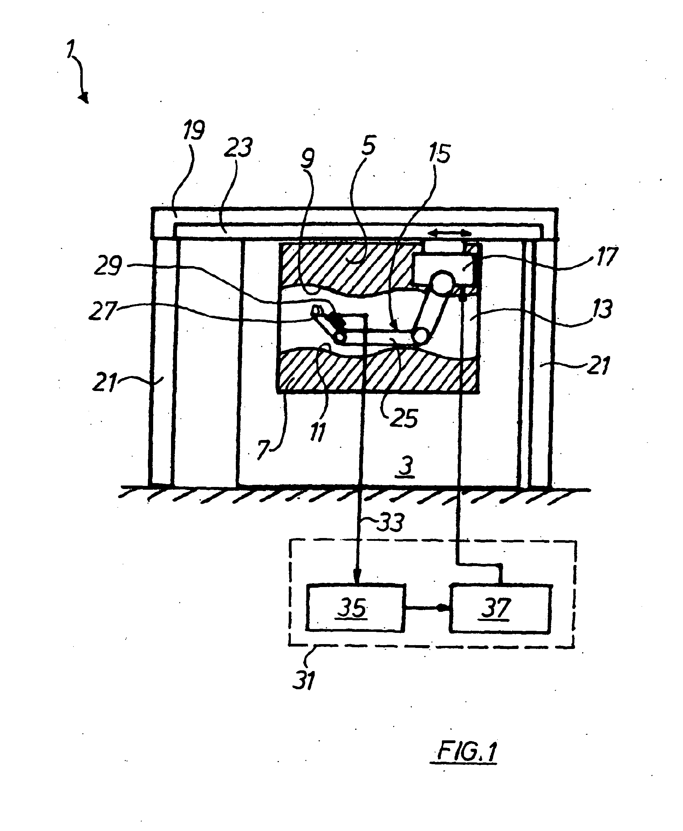

In der Fig. 1 ist eine Vorrichtung 1 zur Endbearbeitung eines Umformwerkzeugs für ein Karosserieblechteil sowie eine zugeordnete Tiefziehpresse 3 gezeigt. Die Tiefziehpresse 3 ist mit einem Tiefziehwerkzeug, bestehend aus einem Werkzeugoberteil 5 und einem Werkzeugunterteil 7 ausgebildet. Die Werkzeugteile 5, 7 sind mit ihren jeweiligen Werkzeugflächen 9, 11 über einen Freiraum 13 voneinander beabstandet. Für einen Pressvorgang ist ein Blechteil in den Freiraum 13 der Presse 3 einzulegen und wird das Werkzeugoberteil 5 mit einem vorgegebenen Anpressdruck gegen das Werkzeug unterteil 7 gedrückt.

Gemäß der Fig. 1 ist unmittelbar vor der Presse 3 die Endbearbeitungsvorrichtung 1 angeordnet. Diese weist insbesondere einen Industrieroboter 15 auf, der über Basisteil 17 in hängender Ausführung an einem Querträger 19 montiert ist. Der Querträger 19 ist wiederum an seinen Stirnseiten über Säulen 21 am Boden abgestützt. Das Basisteil 17 des Industrieroboters 15 ist mit einer Antriebseinheit ausgebildet, über die das Basisteil 17 entlang einer Linearführung 23 des Querträgers 19 in Pfeilrichtung hin- und herbewegbar ist. Zusätzlich ist an dem Roboterbasisteil 17 ein Roboterarm 25 schwenkbar angelenkt, der mit drei Armteilen ausgebildet, die jeweils über Gelenke miteinander gekoppelt sind. Am freien Ende des Roboterarms 25 weist dieser eine Schleifereinheit 27 auf, mit der die jeweiligen Werkzeugoberflächen 9, 11 nachbearbeitbar sind. Zusätzlich ist am freien Ende des Roboterarms 25 in gestrichelter Linie eine Bilderfassungseinrichtung 29, beispielsweise eine Digitalkamera, mit entsprechender Beleuchtungseinrichtung angedeutet. Die Schleifereinheit 2.7 und die Bilderfassungseinheit 29 können in Abhängigkeit von den Einbauverhältnissen am freien Ende des Roboterarms 15 entweder gemeinsam oder alternierend in Abhängigkeit vom durchzuführenden Arbeitsschritt montiert sein.

Gemäß der Fig. 1 ist die Bilderfassungseinheit 29 Teil einer Bearbeitungseinrichtung 31 und mit dieser über eine Signalleitung 33 gekoppelt. Die Bearbeitungseinrichtung 31 besteht aus einer Analyseeinheit 35, der die Bilderfassungseinheit 29 zugeordnet ist. Die Analyseeinheit 35 erfasst die Signale der Bilderfassungseinheit 29 und erzeugt entsprechende Bilddaten der jeweiligen, von der Bilderfassungseinheit 29 fotografierten Werkzeugfläche 9, 11. Die so erzeugten Bilddaten der Werkzeugflächen 9, 11 werden zu einer Steuereinheit 37 der Bearbeitungseinrichtung 31 weitergeleitet, die auf der Grundlage der Bilddaten Steuersignale zu einer Handhabungseinheit, d. h. einem Industrieroboter 15 leitet. In Abhängigkeit dieser Steuersignale bearbeitet der Industrieroboter 15 mit seiner Schleifereinheit 27 die jeweilige Werkzeugoberfläche 9, 11.

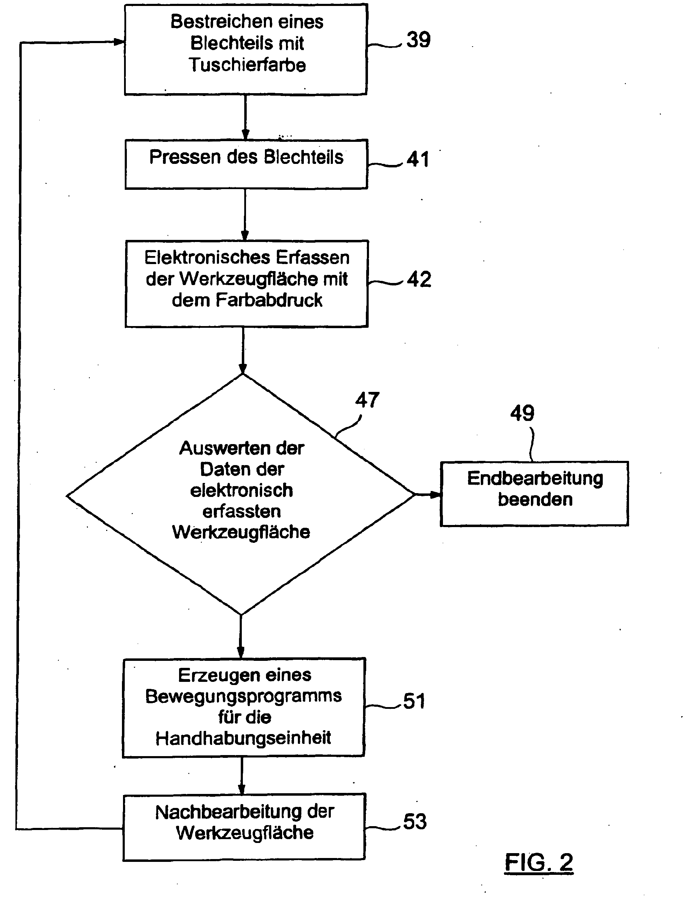

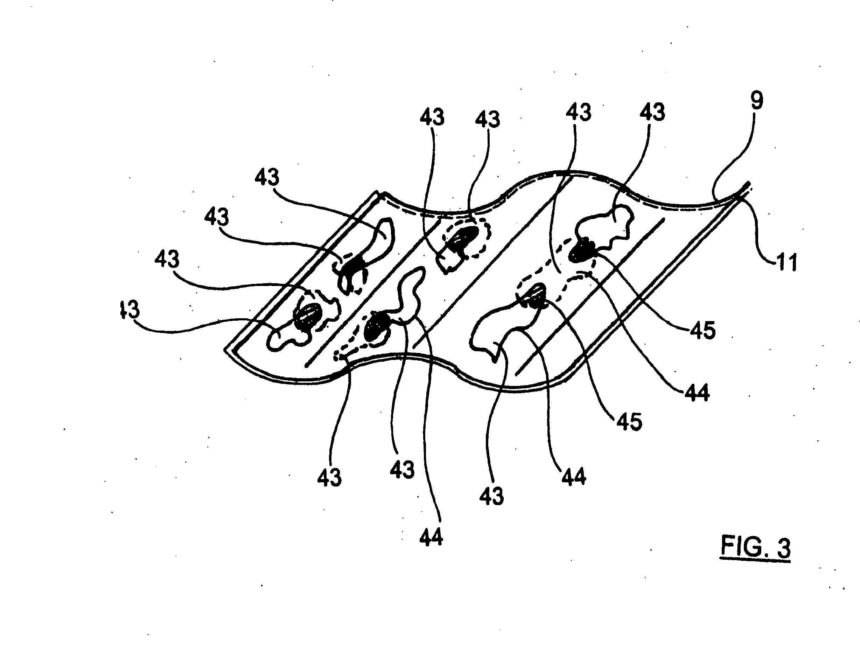

In der Fig. 2 ist in einem Flussdiagramm das Verfahren zur Endbearbeitung der Werkzeugflächen 9, 11 der Werkzeugteile 5, 7 dargestellt. Zunächst wird in einem Arbeitsschritt 39 ein in der Fig. 1 nicht dargestelltes Blechteil mit einer Tuschierfarbe bestrichen. Das Auftragen der Tuschierfarbe auf das Blechteil kann manuell oder automatisiert mittels einer Auftragseinheit erfolgen. Anschließend wird in einem Arbeitsschritt 41 das tuschierte Blechteil zwischen das Werkzeugoberteil 5 und das Werkzeugunterteil 7 der Presse 3 eingelegt und ein Pressvorgang gestartet. Nach dem Ende des Prozesses ist auf den jeweiligen Werkzeugoberflächen 9, 11 ein Farbabdruck des tuschierten Blechteils erkennbar, wie es in der Fig. 3 dargestellt ist.

In der Fig. 3 ist jeweils die wellenförmig ausgebildete Werkzeugfläche 9 des Werkzeugoberteils 5 und die korrespondierende Werkzeugfläche 11 des Werkzeugunterteils 7 übereinander gelagert gezeigt. Die beiden Werkzeugflächen 9, 11 weisen nach dem Tiefziehvorgang jeweils Farbabdrucke auf, von denen die Flächenbereiche 43 mit hoher Farbintensität in der Fig. 3 dargestellt sind. In der Fig. 3 sind die Flächenbereiche 43 der Werkzeugfläche 11 gestrichelt dargestellt.

Entsprechend der Fig. 3 erzeugt in einem Arbeitsschritt 42 die Analyseeinheit 35 anhand der von der Bilderfassungseinheit 29 gewonnenen Bilddaten dreidimensionale Modelle der Werkzeugflächen 9, 11 und überlagert die Flächenbereiche 43 mit hoher Farbintensität der jeweiligen Werkzeugflächen 9, 11. Dabei grenzt die Analyseeinheit 35 jeden der Flächenbereiche 43 mit einer Umfangsrandkurve 44 ein, um den jeweiligen Flächenbereich 43 hoher Farbintensität exakt darzustellen. Bei den Flächenbereichen 43 mit hoher Farbintensität erfolgte der vorangegangene Tiefziehprozess mit zu hoher Flächenpressung.

Anhand der überlagerten Flächenbereiche 43 identifiziert die Analyseeinheit 35 die in der Fig. 3 schraffiert dargestellten Überschneidungsbereiche 45 als die nachzubearbeitenden Flächenbereiche. Die Überschneidungsbereiche 45 zeigen die Stellen, an denen das Blechteil beidseitig mit zu hoher Flächenpressung belastet und daher besonders dünnwandig ist.

In einem weiteren Arbeitsschritt 47 wertet die Steuereinheit 37 die Bilddaten der Analyseeinheit 35 aus. Die Steuereinheit 37 kann dabei zur Auswertung den als Ist-Zustand erfassten Farbabdruck der Werkzeugflächen 9, 11 mit einem gespeicherten Soll-Zustand vergleichen und auf dieser Grundlage entscheiden, welche Flächenbereiche nachzubearbeiten sind. Für den Fall, dass die Steuereinheit 37 im Arbeitsschritt 47 eine im wesentlichen gleichmäßige Farbverteilung des Farbabdruckes der jeweiligen Werkzeugflächen 9, 11 feststellt, beendet die Steuereinheit 37 den Endbearbeitungsvorgang gemäß dem Arbeitsschritt 49. Ermittelt die Steuereinheit 37 dagegen einen Überschneidungsbereich 45 gemäß der Fig. 3, so erzeugt die Steuereinheit 37 in einem Arbeitsschritt 51 ein Bewegungsprogramm für den Industrieroboter 15 anhand der erfassten Bilddaten. Anschließend leitet die Steuereinheit 37 entsprechende Steuersignale zu dem Basisteil 17 des Roboters 15, der in einem Arbeitsschritt 53 den Überschneidungsbereich 45 der beiden Werkzeugflächen 9, 11 nachbearbeitet.

Im Anschluss an diesen Nachbearbeitungsvorgang gemäß dem Arbeitsschritt 53 werden die anhand der Fig. 2 beschriebenen Arbeitsschritte 39 bis 53 erneut solange iterativ durchgeführt, bis die Steuereinheit 37 im Arbeitsschritt 47 feststellt, dass der anhand der Farbabdrucke erfasste Ist-Zustand mit dem gespeicherten Soll-Zustand im wesentlichen übereinstimmt. In diesem Fall wird gemäß dem Arbeitsschritt 49 der Endbearbeitungsvorgang beendet.

## Patentansprüche

1. Vorrichtung zur Endbearbeitung eines Umformwerkzeugs (5, 7) für ein Karosserieblechteil, bei der in einem ersten Arbeitsschritt zum Identifizieren eines nachzubearbeitenden Flächenbereiches (45) einer Werkzeugfläche (9, 11) ein mit einer Tuschierfarbe beschichtetes tiefgezogenes Blechteil in einem Pressvorgang mittels des Werkzeugs (5, 7) umformbar und anhand eines Farbabdruckes des Blechteils auf der Werkzeugfläche (9, 11) der nachzubearbeitende Flächenbereich (45) erfasst ist, und anschließend in einem zweiten Arbeitsschritt der nachzubearbeitende Flächenbereich (45) durch eine entsprechende Oberflächenbehandlung nachbearbeitbar ist, **dadurch gekennzeichnet, dass** die Vorrichtung eine Bearbeitungseinrichtung (31) aufweist, die den Farbabdruck auf der Werkzeugfläche (9, 11) elektronisch erfasst und in Abhängigkeit von einer Farbintensität des Farbabdruckes die Lage und/oder Dimension des nachzubearbeitenden Flächenbereichs (45) ermittelt und diesen entsprechend nachbearbeitet.

2. Vorrichtung nach Anspruch 1, **dadurch gekennzeichnet, dass** die Bearbeitungseinrichtung (31) eine Analyseeinheit (35) aufweist, die die Werkzeugfläche (9, 11) mit dem Farbabdruck vorzugsweise optisch erfasst und entsprechende Bilddaten der Werkzeugfläche erzeugt.

3. Vorrichtung nach Anspruch 2, **dadurch gekennzeichnet, dass** für eine Eingrenzung des nachzubearbeitenden Flächenbereichs (45) die Analyseeinheit (35), vorzugsweise mittels einer Farbkennung, einen Umfangsrand (44) des nachzubearbeitenden Flächenbereichs (45) ermittelt.

4. Vorrichtung nach einem der vorhergehenden Ansprüche, **dadurch gekennzeichnet, dass** die Bearbeitungseinrichtung (31), vorzugsweise die Analyseeinheit (35), eine Bilderfassungseinrichtung (29) aufweist, die die Werkzeugfläche (9, 11) zumindest in einer Ansicht fotografiert und mittels der daraus erzeugten Bilddaten ein dreidimensionales Modell der Werkzeugfläche (9, 11) erstellt.

5. Vorrichtung nach einem der vorhergehenden Ansprüche, **dadurch gekennzeichnet, dass** die Bearbeitungseinrichtung (31) in Abhängigkeit von der Farbintensität des Farbabdruckes eine erforderliche Materialabtragung am nachzubearbeitenden Flächenbereich (45) ermittelt.

6. Vorrichtung nach einem der vorhergehenden Ansprüche, **dadurch gekennzeichnet, dass** die Bearbeitungseinrichtung (31) bei einem, ein Werkzeugoberteil (5) und ein Werkzeug unterteil (7) aufweisenden Werkzeug die zueinander korrespondierenden ersten und zweiten Werkzeugflächen (9, 11) mit dem jeweiligen Farbabdruck erfasst.

7. Vorrichtung nach Anspruch 6, **dadurch gekennzeichnet, dass** die Analyseeinheit (35) Bilddaten des Farbabdruckes der ersten Werkzeugfläche (9) und des Farbabdruckes der zweiten Werkzeugfläche (11) überlagert und einen daraus gebildeten Überschneidungsbereich als den nachzubearbeitenden Flächenbereich (45) festlegt.

8. Vorrichtung nach einem der vorhergehenden Ansprüche, **dadurch gekennzeichnet, dass** die Bearbeitungseinrichtung (31) eine Steuereinheit (37) aufweist, die anhand der erfassten Lage und Dimension des nachzubearbeitenden Flächenbereichs (45) ein Bewegungsprogramm für eine zugeordnete Handhabungseinheit (15) zur Endbearbeitung der jeweiligen Werkzeugfläche (9, 11) erzeugt.

9. Vorrichtung nach einem der vorhergehenden Ansprüche, **dadurch gekennzeichnet, dass** die Bearbeitungseinrichtung (31), insbesondere die Steuereinheit (37), den als Ist-Zustand erfassten Farbabdruck der Werkzeugfläche (9, 11) mit einem gespeicherten Soll-Zustand vergleicht und auf dieser Grundlage den nachzubearbeitenden Flächenbereich (45) entsprechend identifiziert und bearbeitet.

10. Vorrichtung nach einem der vorhergehenden Ansprüche, **dadurch gekennzeichnet, dass** bei einer im wesentlichen .gleichmäßigen Farbverteilung oder Farbintensität des Farbabdruckes auf der Werkzeugfläche (9, 11) oder bei einer im wesentlichen Übereinstimmung des Ist-Zustands und des gespeicherten Soll-Zustands die Bearbeitungseinrichtung (31) einen Endbearbeitungsvorgang beendet.

11. Vorrichtung nach einem der vorhergehenden Ansprüche, **dadurch gekennzeichnet, dass** die Bearbeitungseinrichtung (31) nach erfolgter Nachbearbeitung der Werkzeugfläche (9, 11) einen weiteren Farbabdruck eines tuschierten Blechteiles auf der Werkzeugfläche (9, 11) erneut erfasst und ggf. eine entsprechende Oberflächenbearbeitung durchführt.

12. Vorrichtung nach einem der Ansprüche 8 bis 11, **dadurch gekennzeichnet, dass** die Handhabungseinheit (15) ein Industrieroboter ist, der vorzugsweise an einer dem Werkzeug zugeordneten Presse (3) angeordnet ist.

13. Vorrichtung nach einem der Ansprüche 8 bis 12, **dadurch gekennzeichnet, dass** eine Bilderfassungseinrichtung (29), etwa eine Digitalkamera, und/oder eine Beleuchtungseinrichtung zur Beleuchtung der Werkzeugfläche (9, 11) während der Bilderfassung an dem Industrieroboter (15) montiert und von diesem mitgeführt sind

14. Vorrichtung nach einem der vorhergehenden Ansprüche, **dadurch gekennzeichnet, dass** die Bearbeitungseinrichtung eine Auftragseinheit aufweist, die automatisiert die Tuschierfarbe auf das Blechteil aufträgt.

15. Verfahren zur Endbearbeitung eines Umformwerkzeugs (5, 7) für ein Karosserieblechteil, bei dem in einem ersten Arbeitsschritt zum Identifizieren eines nachzubearbeitenden Flächenbereichs (45) einer Werkzeugfläche (9, 11) ein mit einer Tuschierfarbe beschichtetes Blechteil in einem Vorgang mittels des Werkzeugs (5, 7) gepresst wird und anhand eines Farbabdruckes des Blechteils auf der Werkzeugfläche (9, 11) der nachzubearbeitende Flächenbereich (45) erfasst wird, und in einem zweiten Arbeitsschritt der nachzubearbeitende Flächenbereich (45) durch eine entsprechende Oberflächenbehandlung nachbearbeitet wird, **dadurch gekennzeichnet, dass** der Farbabdruck auf der Werkzeugfläche (9, 11) elektronisch erfasst und in Abhängigkeit von der Intensität des Farbabdruckes die Lage und/oder Dimension des nachzubearbeitenden Flächenbereichs (45) ermittelt und entsprechend nachbearbeitet wird.

## Claims

1. Apparatus for the final processing of a forming tool (5, 7) for a sheet metal body part, in which, in a first working step for identifying a surface region (45) of a tool surface (9, 11) which is to be subjected to further processing, that surface region (45) which is to be further processed is captured, namely by subjecting to a pressing operation by the tool (5, 7), a deformable deep drawn sheet metal part coated with marking colour, being captured by reference to the colour impression made by the sheet metal part upon the tool surface (9, 11); and then in a second working step the surface region (45) which is to be further processed can be processed further by corresponding surface treatment, **characterised in that** the apparatus has a processing device (31) which electronically captures the colour impression on the tool surface (9, 11) and depending upon the colour intensity of the colour impression determines the position and/or the size of the surface region (45) which is to be further processed and processes it further correspondingly.

2. Apparatus according to claim 1, **characterised in that** the processing device (31) has an analysis unit (35) which captures the tool surface (9, 11) with the colour impression, preferably optically, and produces corresponding image data of the tool surface.

3. Apparatus according to claim 2, **characterised in that**, in order to delimit the surface region (45) which is to be further processed, the analysis unit (35) determines a peripheral boundary (44) of the surface region (45) which is to be further processed, preferably by means of colour recognition.

4. Apparatus according to one of the preceding claims, **characterised in that** the processing device (31), preferably the analysis unit (35), has an image capturing device (29) which takes a photograph of the tool surface (9, 11) in at least one view and creates a three dimensional model of the tool surface (9, 11) from the image data produced thereby.

5. Apparatus according to one of the preceding claims, **characterised in that** the processing device (31), depending on the colour intensity of the colour impression, determines the requisite material removal from the surface region (45) which is to be further processed.

6. Apparatus according to one of the preceding claims, **characterised in that**, in a tool that has an upper tool part (5) and a lower tool part (7), the processing device (31) captures the mutually corresponding first and second tool surfaces (9, 11) with the respective colour image.

7. Apparatus according to claim 6, **characterised in that** the analysis unit (35) superimposes image data of the colour impression of the first tool surface (9) and the colour impression of the second tool surface (11), and, from the overlapping regions formed thereby, ascertains the surface region (45) which is to be further processed.

8. Apparatus according to one of the preceding claims, **characterised in that** the processing device (31) has a control unit (37), which, from the captured position and size of the surface region (45) which is to be further processed, produces a motion program for an associated handling unit (15) for the final processing of the respective tool surface (9, 11).

9. Apparatus according to one of the preceding claims, **characterised in that** the processing device (31), especially the control unit (37), compares the colour impression of the tool surface (9, 11) captured as actual condition, with a stored desired condition, and based thereon correspondingly identifies and processes the surface region (45) which is to be further processed.

10. Apparatus according to one of the preceding claims, **characterised in that** the processing device (31) terminates the final processing operation if the colour distribution or colour intensity of the colour impression on the tool surface (9, 11) is essentially even or if the actual condition and the stored desired condition essentially coincide.

11. Apparatus according to one of the preceding claims, **characterised in that** the processing device (31), after further processing of the tool surface (9, 11) has taken place, captures anew a further colour image made by a colour coated sheet metal part upon the tool surface (9, 11), and, as appropriate, carries out corresponding surface processing.

12. Apparatus according to one of claims 8 to 11, **characterised in that** the handling unit (15) is an industrial robot, which is preferably arranged on a press (3) associated with the tool.

13. Apparatus according to one of claims 8 to 12, **characterised in that** an image capturing device (29), such as a digital camera and/or an illuminating device for illuminating the tool surface (9, 11) are mounted on the industrial robot (15) and carried along with it during the image capture.

14. Apparatus according to one of the preceding claims, **characterised in that** the processing device has an applicator unit which applies the marking colour to the sheet metal part automatically.

15. Method for the final processing of a forming tool (5, 7) for a sheet metal body part, in which, in a first working step for identifying a surface region (45) of a tool surface (9, 11) which is to be subjected to further processing, a sheet metal part coated with marking colour is pressed in an operation utilising the tool (5, 7), and by reference to the colour impression made by the sheet metal part upon the tool surface (9, 11), the surface region (45) which is to be further processed is captured, and in a second working step the surface region (45) which is to be further processed is processed further by corresponding surface treatment, **characterised in that** the colour impression on the tool surface (9, 11) is captured electronically and depending upon the intensity of the colour impression the position and/or the size of the surface region (45) which is to be further processed is determined and further processed correspondingly.

## Revendications

1. Dispositif d'usinage final d'un outil de formage (5, 7) pour une pièce en tôle pour carrosserie, dans lequel dans une première étape de travail pour l'identification d'une zone de surface (45) à rectifier d'une surface d'outil (9, 11), une pièce en tôle emboutie revêtue d'une couleur de marquage peut être formée dans un processus de pressage au moyen de l'outil (5, 7) et la zone de surface (45) à rectifier est détectée au moyen d'une empreinte colorée de la pièce en tôle sur la surface d'outil (9, 11), et ensuite dans une seconde étape de travail, la zone de surface (45) à rectifier peut être rectifiée par un traitement de surface correspondant, **caractérisé en ce que** le dispositif présente un dispositif d'usinage (31) qui détecte électroniquement l'empreinte colorée sur la surface d'outil (9, 11) et en fonction d'une intensité de couleur de l'empreinte colorée détermine la position et/ou la dimension de la zone de surface (45) à rectifier et la rectifie en conséquence.

2. Dispositif selon la revendication 1, **caractérisé en ce que** le dispositif d'usinage (31) présente une unité d'analyse (35) qui détecte de préférence optiquement la surface d'outil (9, 11) avec l'empreinte colorée et génère des données d'image correspondantes de la surface d'outil.

3. Dispositif selon la revendication 2, **caractérisé en ce que** pour une localisation de la zone de surface (45) à rectifier, l'unité d'analyse (35) détermine de préférence au moyen d'une identification de couleur un bord périphérique (44) de la zone de surface (45) à rectifier.

4. Dispositif selon l'une quelconque des revendications précédentes, **caractérisé en ce que** le dispositif d'usinage (31) présente de préférence l'unité d'analyse (35), un dispositif d'enregistrement d'images (29) qui photographie la surface d'outil (9, 11) au moins dans une vue et établit au moyen des données d'image générées à partir de cela un modèle en trois dimensions de la surface d'outil (9, 11).

5. Dispositif selon l'une quelconque des revendications précédentes, **caractérisé en ce que** le dispositif d'usinage (31) détermine en fonction de l'intensité de couleur de l'empreinte colorée un enlèvement de matière requis sur la zone de surface (45) à rectifier.

6. Dispositif selon l'une quelconque des revendications précédentes, **caractérisé en ce que** le dispositif d'usinage (31) détecte pour un outil présentant un dessus (5) et un dessous (7), les premières et secondes surfaces d'outil (9, 11) correspondant l'une à l'autre avec l'empreinte colorée respective.

7. Dispositif selon la revendication 6,
**caractérisé en ce que** l'unité d'analyse (35) superpose des données d'image de l'empreinte colorée de la première surface d'outil (9) et de l'empreinte colorée de la seconde surface d'outil (11) et définit une zone de recoupement formée à partir de cela comme la zone de surface (45)à rectifier.

8. Dispositif selon l'une quelconque des revendications précédentes, **caractérisé en ce que** le dispositif d'usinage (31) présente une unité de commande (37) qui génère au moyen de la position et de la dimension détectée de la zone de surface (45) à rectifier un programme de déplacement pour une unité de manipulation (15) associée à des fins d'usinage final de la surface d'outil (9, 11) respective.

9. Dispositif selon l'une quelconque des revendications précédentes, **caractérisé en ce que** le dispositif d'usinage (31), en particulier l'unité de commande (37) compare l'empreinte colorée détectée en tant qu'état réel de la surface d'outil (9, 11) avec un état de consigne enregistré et identifie et usine en conséquence sur cette base, la zone de surface (45) à rectifier.

10. Dispositif selon l'une quelconque des revendications précédentes, **caractérisé en ce que** pour une répartition de couleur essentiellement uniforme ou intensité de couleur de l'empreinte colorée sur la surface d'outil (9, 11) ou en cas d'une concordance essentielle de l'état réel avec l'état de consigne enregistré, le dispositif d'usinage (31) termine un processus d'usinage final.

11. Dispositif selon l'une quelconque des revendications précédentes, **caractérisé en ce que** le dispositif d'usinage (31) détecte de nouveau après la rectification de la surface d'outil (9, 11)survenue, une autre empreinte colorée d'une pièce en tôle marquée sur la surface d'outil (9, 11) et réalise éventuellement un usinage de surface correspondant.

12. Dispositif selon l'une quelconque des revendications 8 à 11, **caractérisé en ce que** l'unité de manipulation (15) est un robot industriel qui est disposé de préférence sur une presse (3) associée à l'outil.

13. Dispositif selon l'une quelconque des revendications 8 à 12, **caractérisé en ce qu'**un dispositif d'enregistrement d'images (29) tel qu'une caméra numérique, et/ou un dispositif d'éclairage pour l'éclairage de la surface d'outil (9, 11) pendant l'enregistrement d'images sont montés sur le robot industriel (15) et sont entraînés par celui-ci.

14. Dispositif selon l'une quelconque des revendications précédentes, **caractérisé en ce que** le dispositif d'usinage présente une unité d'application qui applique de manière automatisée la peinture de marquage sur la pièce en tôle.

15. Procédé d'usinage final d'un outil de formage (5, 7) pour une pièce en tôle pour carrosserie, dans lequel dans une première étape de travail pour l'identification d'une zone de surface (45) à rectifier d'une surface d'outil (9, 11), une pièce en tôle revêtue d'une peinture de marquage peut être pressée dans un processus au moyen de l'outil (5, 7) et la zone de surface (45) à rectifier est détectée au moyen d'une empreinte colorée de la pièce en tôle sur la surface d'outil (9, 11), et dans une seconde étape de travail, la zone de surface (45) à rectifier peut être rectifiée par un traitement de surface correspondant, **caractérisé en ce que** l'empreinte colorée est détectée électroniquement sur la surface d'outil (9, 11) et en fonction de l'intensité de couleur de l'empreinte colorée, la position et/ou la dimension de la zone de surface (45) à rectifier est déterminée et rectifiée en conséquence.
